(19) Europäisches Patentamt / European Patent Office / Office européen des brevets

(11) **EP 1 746 770 A1**

## (12) EUROPEAN PATENT APPLICATION

(43) Date of publication:
**24.01.2007 Bulletin 2007/04**

(51) Int Cl.:
*H04L 12/28* (2006.01)

(21) Application number: **05254551.4**

(22) Date of filing: **21.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **STMicroelectronics (Research & Development) Limited**
**Marlow,**
**Buckinghamshire SL7 1YL (GB)**

(72) Inventor: **Oakes, Ivan,**
**c/o STMicroelectronics Ltd.**
**Theale**
**Reading**
**Berkshire RG6 4SA (GB)**

(54) **Method for modifying a transmission characteristic of a communication channel, and network device therefor**

(57)    A network device comprising a receiver for sampling a number of timeslots in a communication channel; a processor for determining a collision ratio associated with the communication channel based upon the number of sampled time slots and the number of sampled time slots in which communication activity was detected over the communication channel and determining a collision probability based upon averaging the collision ratio over time; and means for modifying a transmission characteristic based upon the determined collision probability.

Fig. 1

EP 1 746 770 A1

## Description

The present invention relates to a network device and a method for modifying a transmission characteristic.

Since the success of the Ethernet project at Xerox's Palo Alto Research Centre in the early 1970's network technology use has blossomed with a variety of different network standards having been proposed and adopted. The fundamental aim of each standard being to provide a mechanism to provide multiple access for different network nodes for the same communication medium.

Although initial networking technology was based upon a wired communication medium, over recent years wireless networking communication has enjoyed tremendous growth. As such, current networking standards are not only required to address a plurality of different multiple access schemes but are also required to address different communication medium types for both wired and wireless networks.

One popular medium access scheme that provides a simple and cost effective solution that also allows automatic medium sharing in an asynchronous manner is carrier sense medium access with collision avoidance CSMA/CA, in which the same network medium is used to communicate with by a plurality of network nodes. By way of illustration, a CSMA network device (e.g. network node) that receives a packet for transmission over a network listens to the network medium (i.e. communication channel or link) to ensure that no other network nodes are transmitting. If the communication channel is clear the CSMA device then transmits the packet, if the communication channel is busy the CSMA device waits a random time period before transmitting, thereby minimising the possibility of collisions with data being transmitted by another network node over the communication channel. As such, the ability to communicate over a CSMA based network will depend, in part, upon how much communication traffic is being transmitted over the communication channel for all network nodes.

However, certain CSMA network nodes are only designed to include one transceiver that is unable to transmit and receive simultaneously and as such is unable to receive a signal while transmitting. Consequently, such network nodes are unable to determine whether a collision has occurred during the transmission of a message.

Although some network standards address this problem via the use of acknowledgement messages, for example 802.11 compliant networks, the use of acknowledgement messages only provide information relating to previous transmission successes and does not, in itself, provide current information as to the likelihood of having a successful transmission over the network.

It is desirable to improve this situation.

In accordance with an aspect of the present invention there is provided a network device and a method for modifying a transmission characteristic according to the accompanying claims.

This provides the advantage of allowing a transmission characteristic, for example transmit rate or back-off interval, to be modified as a result of the determined collision probability, for example where a determined collision probability is low a decision can be made to increase the rate of data transmission as there is a good likelihood that an acceptable level of error free throughput will be maintained.

An embodiment of the invention will now be described, by way of example, with reference to the drawing, of which:

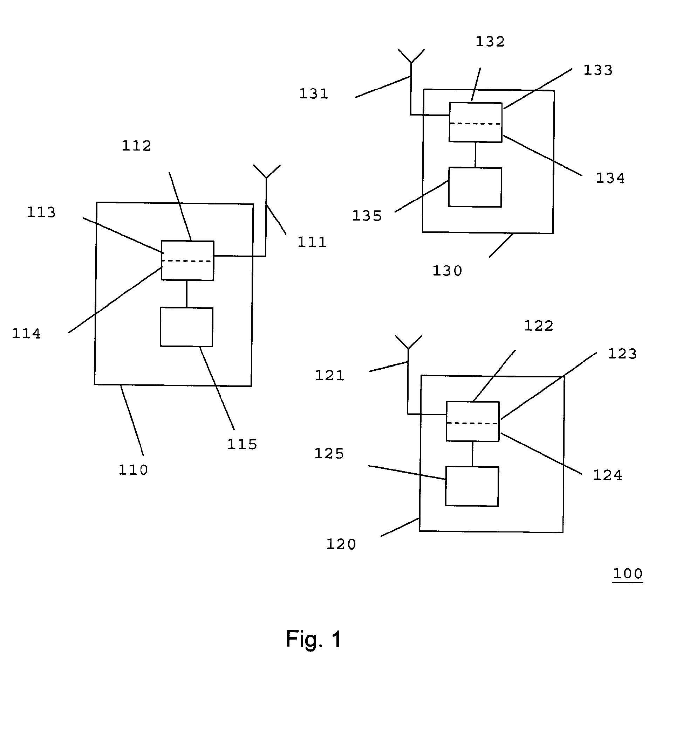

Figure 1 illustrates an wireless network having a network node in accordance with an aspect of the present invention.

Figure 1 shows a wireless communication local area network 100 arranged to operate in accordance with the 802.11 network standard, however other CSMA based networks could be used, for example HomePLug and HomeRF network systems.

The wireless communication network 100 includes a first wireless communication device 110 (i.e. a first network node), a second wireless communication device 120 (i.e. a second network node), and a third wireless communication device 130 (i.e. a third network node) that are arranged to form a local area network.

Although the current embodiment illustrates, for simplicity, a local area network having three network nodes, as a person skilled in the art would appreciate, the local area network could be configured to have any suitable number of network nodes.

As shown in figure 1, the first network node 110 includes an antenna 111 coupled to a transceiver 112 (i.e. a transmitter 113 and receiver 114), with the transceiver 112 being coupled to a processor 115. Corresponding both the second 120 network node and third network node 130 also have a respective antenna 121, 131 coupled to a transceiver 122, 132 (i.e. a transmitter 123, 133 and receiver 124, 134), with their respective transceivers 122, 132 being coupled to a processor 125, 135. The respective transceivers 112, 122, 132 and processors 115, 125, 135 for the first, second and third network nodes 110, 120, 130 are arranged to operate in accordance with the 802.11 standard and, as such, define the various OSI layers as required by the 802.11 standard, for example both the physical layer and medium access control layer, as described below.

Each of the network nodes 110, 120, 130 will typically include other well known features, for example an input device (not shown), which are well known to a person skilled in the art and as such will not be describe any further for the purposes of the present embodiment.

The respective processors 115, 125, 135 and transceivers 112, 122, 132 of the first, second and third network nodes 110, 120, 130 are arranged to transmit and receive messages/packets via a wireless communication channel as defined in the 802.11 standard, as is well known to a person skilled in the art

In accordance with the 802.11 standard, as stated above, the first network node 110, the second network node 120, and the third network node 130 incorporate a physical layer (i.e. the transceivers 112, 122, 132) that is arranged to allow the transmission of variable bit rates, where each bit rate uses a particular modulation scheme to transfer a data stream into a sequence of symbols, which are encoded by changes in amplitude, phase, or frequency, or a combination of these, of an analog signal, as is well known to a person skilled in the art.

By way of illustration table 1 below provides a summary of the modulation schemes associated with the bit rates used in 802.11. Additionally, table 1 provides information on how a signal is placed on a channel, that is to say as to whether direct sequence spread spectrum DSSS or orthogonal frequency division multiplexing OFDM is to be used.

TABLE 1

| bit-rate Mbps | 802.11 standard | DSSS or OFDM | Modulation |
|---|---|---|---|
| 1 | b/g | DSSS | BPSK |
| 2 | b/g | DSSS | QPSK |
| 5.5 | b/g | DSSS | CCK |
| 11 | b/g | DSSS | CCK |
| 6 | a/g | OFDM | BPSK |
| 9 | a/g | OFDM | BPSK |
| 12 | a/g | OFDM | QPSK |
| 18 | a/g | OFDM | QPSK |
| 24 | a/g | OFDM | QAM-16 |
| 36 | a/g | OFDM | QAM-16 |
| 48 | a/g | OFDM | QAM-16 |
| 54 | a/g | OFDM | QAM-16 |

As can be seen from table 1, in accordance with the 802.11 standard the three network nodes 110, 120, 130 have a plurality of bit rates available for transmitting data over the communication channel.

In accordance with the 802.11 standard the first network node 110, the second network node 120 and the third network node 130 have a medium access control MAC layer (not shown) in which the basic network medium access method is the distributed coordination function DCF, as defined by the CSMA/CA MAC protocol.

In accordance with the DCF, before initiating transmission a network node 110, 120, 130 senses (i.e. samples) the wireless communication channel (i.e. communication medium) established between the first, second and third network nodes 110, 120, 130, using the respective receivers 114, 124, 134 to determine whether another network node is transmitting.

Before transmission, the network node chooses a random interval, otherwise known as a back-off interval, which is used to initialise a back-off timer (not shown).

The back-off timer is decreased for as long as the channel is sensed (i.e. sampled) to be idle but the timer is stopped when a transmission is detected on the channel and reactivated when the channel is sensed as idle again for more than a distributed interframe space DIFS. The network node is arranged to transmit when the back-off timer reaches zero.

The specific back-off technique adopted by the DCF is known as the slotted binary exponential back-off technique in which the time immediately following an idle DIFS is slotted, and a network node is allowed to transmit only at the beginning of each slot time, which is sufficient time for any network node to detect the transmission of a packet from any other network node and change from receive to transmit mode. The back-off time is uniformly chosen in an interval known as the back-off window (i.e. contention window). At the first attempt to transmit a message the contention window (i.e. the back-off interval or back-off window) is set to a minimum value (i.e. CW=CWmin). If the transmission fails (e.g. due to collision with another transmission) the contention window is doubled for each retransmission up to a maximum value.

As stated above, successful reception of a transmitted packed is acknowledged with an acknowledgement message transmitted from the receiving node to the transmitting node. This is accomplished by the receiver initiating the transmission of the acknowledgment message after a short interframe space SIFS, which is less than the DIFS.

If an acknowledgement is not received, the data frame is presumed to have been lost, for example due to collision with another packet or due to poor channel conditions, and a retransmission is scheduled.

To assist in determining the selection of a transmit rate and/or the back-off interval the processors included within the network nodes are arranged to calculate a probability value for the likelihood that a collision will occur when transmitting over the wireless communication channel, this allows the respective network nodes to make a determination on transmission characteristics based on possible future occurrences rather than historical information.

For the purposes of the present embodiment the following description is based upon the first network node 110 being arranged to calculate a probability value for the likelihood that a collision will occur when transmitting over the wireless communication channel, however as would be appreciated by a person skilled in the art, this description could apply equally to some or all of the other network nodes 120, 130.

The probability of a collision occurring is calculated by first determining the total number of slots sampled Ns by the receiver 114 within the contention window during the back-off period.

As stated above, the total number of slots sampled Ns will be a combination of the number of slots that normally would be sampled during the back-off period (i.e. Nb) plus the additional slots when back-off was suspended due to the detection of a signal in a slot (i.e. Nd). From this value a collision ratio CR can be calculated by the processor 115 by dividing the total number of slots sampled by the number of slots sampled during the back-off period, as shown in equation 1) below.

$$CR = Ns/Nb = (Nb+Nd)/Nb \qquad\qquad 1)$$

With the collision ratio calculated the processor 115 is arranged to determine a probability of collision PC, for example by using an averaging method (see equation 2 below), as is well known to a person skilled in the art.

$$PC = Average(CR) \qquad\qquad 2)$$

Having calculated a PC value the processor 115 can be arranged to modify the transmission characteristics such as the selection of a transmit rate or defining a back-off interval, as illustrated below, however other transmission characteristics could be modified, for example transmit power and frame size.

For example, the processor 115 can be arranged to use the calculated probability of collision PC to select a transmit rate by using the probability of collision information to isolate the number of transmission failures that occur due to collisions from transmission failures occurring as a result of communication channel link quality. This can be achieved by multiplying the probability of collision PC with the number of transmit failures Nf and then subtracting this value from the number of transmit failures, as shown in equation 3) below.

$$Nfc = Nf - Nf.PC \qquad\qquad 3)$$

As such, the corrected number of transmit failures Nfc correspond to the number of transmit failures resulting from communication channel link quality. The corrected number of transmit failures Nfc can then be input into a transmit rate selection algorithm to determine a transmit rate from available transmit rates, as shown in table 1, based upon communication channel link quality.

Alternatively, the probability of collision information could be used to determine a back-off interval. For example, if the average collision probability was found to be low then the nominal back-off interval could be decreased so reducing the otherwise unused bandwidth. If, however, the collision probability was found to be high, the normal back-off interval could be restored.

**Claims**

1. A network device (110) comprising a receiver (114) for sampling a number of timeslots in a communication channel; **characterised by** a processor (115) for determining a collision ratio associated with the communication channel based upon the number of sampled time slots and the number of sampled time slots in which communication activity was detected over the communication channel and determining a collision probability based upon averaging the collision ratio over time; and means for modifying a transmission characteristic based upon the determined collision probability.

2. A network device (110) according to claim 1, further comprising a transmitter (113) arranged to transmit data in accordance with the modified transmission characteristics.

3. A network device (110) according to claim 1 or 2, wherein the transmission characteristic modified based upon the determined collision probability is the transmit rate of data over the communication channel.

4. A network device (110) according to any preceding claim, wherein the transmission characteristic modified based upon the determined collision probability is a back-off time period.

5. A network device (110) according to any preceding claim, wherein the number of timeslots sampled by the receiver (114) is based upon a back-off time period and a number of times communication activity was detected over the communication channel during the back-off time period.

6. A network device (110) according to any preceding claim, wherein the communication channel is a wireless communication channel.

7. A network device (110) according to any preceding claim, wherein the communication channel is a shared communication channel.

8. A network device (110) according to any of claims 2 to 7, wherein the transmitter (113) is arranged to transmit messages according to a carrier sense multiple access scheme.

9. A network device (110) according to any of claims 2 to 8, wherein the transmitter (113) is arranged to transmit messages according to the 802.11 standard.

10. A method for modifying a transmission characteristic, the method comprising sampling a number of timeslots in a communication channel; **characterised by** determining a collision ratio associated with the communication channel based upon the number of sampled time slots and the number of sampled time slots in which communication activity was detected over the communication channel; determining a collision probability based upon averaging the collision ratio over time; and modifying a transmission characteristic based upon the determined collision probability.

Fig. 1

**European Patent Office**

## EUROPEAN SEARCH REPORT

Application Number

EP 05 25 4551

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 255 376 A (LUCENT TECHNOLOGIES INC.) 6 November 2002 (2002-11-06) * page 5, paragraph 21 - paragraph 27 * ----- | 1-10 | H04L12/28 |
| A | WEN KUANG KUO ET ALL: "enhanced backoff scheme in csma/ca for ieee 802.11" VEHICULAR TECHNOLOGY CONFERENCE 2003 VTC 2003 FALL IEEE 58TH, vol. 5, 6 October 2003 (2003-10-06), pages 2809-2813, XP002356720 * the whole document * ----- | 1-10 | |

TECHNICAL FIELDS SEARCHED      (IPC)

H04L

The present search report has been drawn up for all claims

| Place of search | Date of completion of the search | Examiner |
|---|---|---|
| Berlin | 30 November 2005 | M. García |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 4551

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2005

| Patent document cited in search report | | Publication date | Patent family member(s) | | Publication date |
|---|---|---|---|---|---|
| EP 1255376 | A | 06-11-2002 | CA | 2378807 A1 | 03-11-2002 |
| | | | CN | 1384646 A | 11-12-2002 |
| | | | DE | 60200680 D1 | 05-08-2004 |
| | | | DE | 60200680 T2 | 25-08-2005 |
| | | | JP | 2002374264 A | 26-12-2002 |
| | | | US | 2002188750 A1 | 12-12-2002 |

EPO FORM P0459

For more details about this annex : see Official Journal of the European Patent Office, No. 12/82